# EUROPEAN PATENT APPLICATION

(11) **EP 1 355 225 A1**
(43) Date of publication of application: **22.10.2003**
(21) Application number: 02252643.8
(22) Date of filing: 15.04.2002
(51) Int. Cl.: G06F 3/00, G06F 3/023, H04M 1/247

(54) **Method and device for inputting chinese characters on a hand-held electronic device**

(71) Applicant: TELEFONAKTIEBOLAGET LM ERICSSON (publ), 126 25 Stockholm (SE)
(72) Inventor: Tng, Tai Hou, Signature Park, Singapore 596741 (SG); Loudon, Gareth, Newport, NP 10 OAL, South Wales (GB)
(74) Representative: Vigars, Christopher Ian

(57) **Abstract**

The present invention provides a method of entering Chinese characters on a handheld electronic device using an input method driven by a joystick of the device, wherein movements of the joystick serve to select respective character portions, and wherein a character is constructed from such selected character portions.

## Description

### FIELD OF THE INVENTION

This invention relates to entering characters into a handheld electronic device, such as a mobile communications device.

### BACKGROUND OF THE INVENTION

The Short Message Service (SMS) has not taken off as explosively in China as in Europe and the US because of the difficulty in finding suitable methods of entry, and devices, which will support the 10,000 plus characters present in the Chinese language. The difficulty mainly arises due to the limited number of keys present on a mobile telephone keypad (typically around 12 including keys for the digits 0-9), and the small display size, which is not suited to the display of ideographic characters. This makes the entry of Chinese text slow and cumbersome.

There have been many attempts to adapt existing methods of Chinese text entry used by typists in China. Some are based on handwriting recognition, but require a dedicated handwriting tablet, which is not a viable option for small, lightweight mobile communication devices. Another method is based upon a phonetic transcription of the Chinese language (called *HanYu PinYin*). However, since multiple characters correspond to a single pronunciation, isolating the desired character from a list of many does slow and interrupt the process. In addition, phonetic input methods that use one Chinese dialect are unusable by speakers of another dialect.

Another popular method is called *WuBi* in which every Chinese character is broken down into its roots, or *radicals.* Conversely, characters can be built up using these radicals. The radicals are grouped in categories based upon the direction of the radical's first stroke. A detailed description of the WuBi method of Chinese character input may be found at http://www.people.fas.harvard.edu/∼wicentow/wubixing.ht ml.

The WuBi input method allows a Chinese character to be entered using four or less keystrokes. If a character has more then four radicals, the first three and the last are entered. Representative characters may be typed by entering their particular key four times. When a character appears on a key but is not a representative root it may be entered by firstly typing the key that the character lies on, then secondly, the character is built by entering the key that contains its first stroke. Thirdly, the key that contains its second stroke is entered. Finally, the key that contains its final stroke is entered.
WuBi also provides many typing shortcuts, which allow the user to enter only a portion of a character's complete code to produce it. A character has a reduced code under three circumstances. Firstly, when WuBi logic has eliminated all other characters based on the code already entered; and/or second, when the character is a commonly-used character (and therefore was given a shorter code before other, less commonly used characters); and/or third, when the character is one of the 25 first level characters (whose codes consist of a single key).

The WuBi method solves both the dialect and speed problems associated with Chinese character entry. Any Chinese character can be entered by using four or less keystrokes, and in addition the method is based on the written character, rather than pronunciation, meaning that multiple methods for different dialects are not necessary. WuBi is therefore universal, and a skilled operator can input 160 characters per minute, a rate exceeding any Western language.

The methods described have been employed in the art with varying degrees of success. For example, WO 00/72300 to Wu et al. describes a data entry device in which the movement of an input element used by the person entering data corresponds to the initial stroke of the radical required. However, by only specifying an initial direction, many possible candidate characters will be displayed which the user will constantly have to monitor in order to determine the character required.

US 6,009,444 to Chen describes a method of entering text into a mobile device. The method involves activating keys depending on the particular character you wish to enter. Groups of characters are mutually exclusive. This has the disadvantage that multiple keystrokes are required, and in addition, it will be difficult for a user to determine which digit should represent a specific character.

Also, US 5,952,942 describes a method of text input in a similar fashion to that above, the main difference being the inclusion of predictive text functionality.

There therefore exists a need to provide a quick, efficient and intuitive method of entering Chinese text into a mobile device without the need for multiple keystrokes.

### SUMMARY OF THE INVENTION

According to the present invention there is provided a method of entering Chinese characters on a handheld electronic device using an input method driven by an input device having a plurality of degrees of freedom of movement, wherein movements of the input device serve to select respective character portions, and wherein a character is constructed from such selected character portions.

Further according to the present invention there is provided a hand held electronic device comprising a controller, a data storage device and an input device having a plurality of degrees of freedom of movement, wherein the data storage device is operable to store character portion data which relate to respective portions of Chinese characters, and wherein the controller is operable to receive user inputs from the input device to select character portion data in dependence upon the received user inputs, and to compose data relating to a Chinese character from such selected character portion data.

It should be emphasised that the term "comprises/comprising" when used in this specification is taken to specify the presence of stated features, integers, steps or components but does not preclude the presence or addition of one or more other features, integers, steps, components or groups thereof.

### BRIEF DESCRIPTION OF THE DRAWINGS

For a better understanding of the invention, and to show how it may be brought into effect, reference will now be made, by way of example, to the accompanying drawings, in which:
Fig. 1a depicts the regions mapped onto a keyboard under the WuBi scheme.
Fig. 1b depicts the basic WuBi mapping for a keyboard with the five regions highlighted.
Fig. 1c depicts the complete WuBi mapping for a keyboard.
Figs. 2a-d depict a method of character entry using the adapted WuBi method on a mobile phone using a five-way joystick.
Fig. 3 is a flow chart depicting character entry using the WuBi input method.

### DETAILED DESCRIPTION OF THE INVENTION

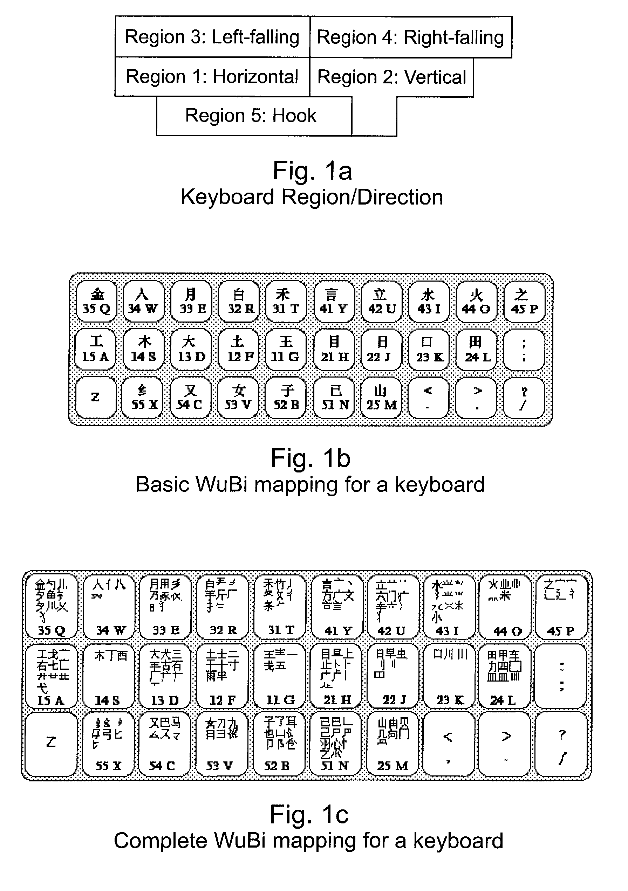

Every Chinese character can be broken down into radicals (its root characters). Conversely, characters can be built up by combining these radicals, and may be made up from up to ten radicals. The WuBi input method makes full use of this principle, and organises the keyboard of a PC into five regions corresponding to the different directions of a radical's first stroke. Each region is further subdivided into five keys (making 25 in total), where each key contains a number of character roots. Figure 1a shows how a PC keyboard is divided into regions under the WuBi system and the basic keyboard layout is shown in Fig. 1b, with the complete mapping shown in Fig. 1c. It is therefore convenient to map the WuBi system to a mobile communications device that supports a five-way joystick (or similar device), with each region of the WuBi keyboard corresponding to a direction selectable with the joystick.

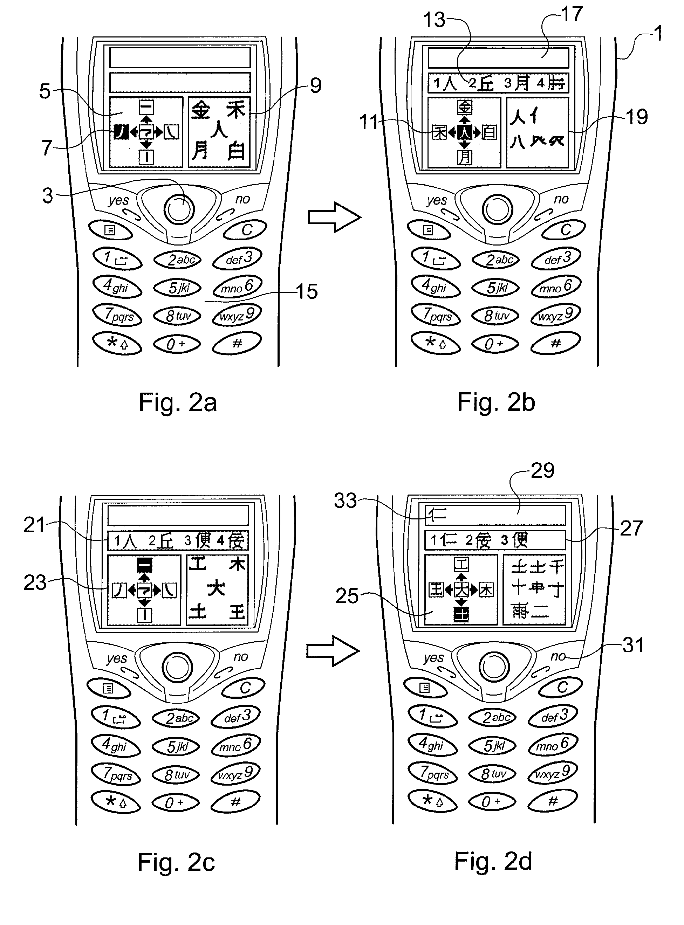

Figures 2a-d show how a Chinese ideographic character may be entered into a mobile communications device 1 with a five-way joystick 3 using the adapted WuBi method. Figures 2a-d show the method being used on the Ericsson T68 (a mobile phone), but it should be noted that the method is generally applicable to portable radio communication equipment or mobile radio terminals, such as pagers, communicators, electronic organisers, personal digital assistants (PDA's), or any other equipment in which it is desired to be able to input characters which are selected from a large character set.

The Chinese character to be entered is composed of two radicals, and must therefore be entered in two stages. Figures 2a and b show the entry of the first radical, and Figures 2c and d show the entry of the second, which results in the entry of the overall character.

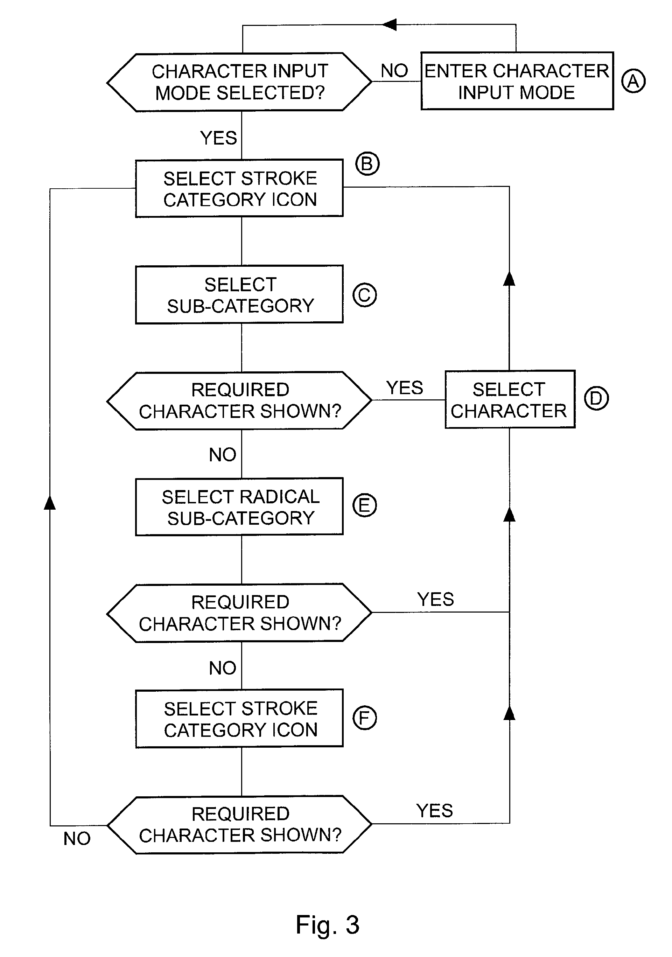

The method outlined below is depicted diagrammatically in Fig. 3, which is a flow chart showing the process required for the selection of a character. To begin the process, the user puts the phone into an ideographic character input mode (Step A). This may be done, for example, by selecting this mode from a menu of features in a generally conventional way. Figure 2a shows the character input screen as displayed in the ideographic character input mode showing the five keystroke categories 5. These categories map to the five regions of the keyboard in the original WuBi design (see Fig. 1a). In this example, the first stroke of the first radical of the character being entered is left-falling. Therefore the user moves the joystick 3 to the left (Step B). This highlights the left-falling stroke category icon 7. While the icon is highlighted, the bottom right hand side of the screen 9 shows the five sub-categories of radicals under this top-level stroke category. When the user depresses the five-way joystick 3, a selection is made (Step C). The screen then changes to that shown in Fig. 2b.

Now the five sub-category icons are shown in the bottom left hand corner of the screen 11. Also, a list of possible candidate characters is shown in the row above 13. This list contains all characters that start with a left-falling stroke (no matter how many radicals there are in the character). Each character is tagged by a separate numeric digit, each of which being adapted to facilitate selection of the individual characters when the user presses the appropriate numeric key on the keypad 15 relating to the desired character. If the user can find their character in the list 13 they may therefore select it by pressing the appropriate numerical key on the keypad 15 (Step D), in which case the selected character will be sent to the output display box 17 on the top row of the screen, and the user may begin the process of entering another character if required (return to Step B). If the character is not there the user carries on giving more details as to the character to be entered. More details are given by moving the joystick 3 to the required radical sub-category 11 and then depressing the joystick 3 to make a selection (Step E). All the actual radicals covered by this sub-category 11 are displayed in the bottom right hand corner of the screen 19. There is no need to go to another level of detail and select the exact radical required, but rather continue to enter the next radical in the character. This is because the WuBi method has been designed so that every Chinese character is uniquely defined by an unambiguous list of radical sub-categories.

The same procedure as followed above is taken to enter the second radical. Note the candidate character list 21 has been updated after a selection has been made from the first radical sub-category 23. The updated list 21 now only shows characters beginning with radicals that are in the radical sub-category 23 selected. The second radical is selected via the same method as that outlined above. Once the second radical has been selected 25 (Step F), only three candidate characters remain in the list 27. The user selects the appropriate character (Step D) by pressing the corresponding numerical key on the keypad 15 (number 1 in this case) and the selected character is sent to the output display box on the top row of the screen 29. The process may then be repeated in order to enter another character. At any time, the composed passage of text in the output text display box 29 may be recorded in the memory of the phone in order to be sent over a radio communications network at a later time, or may be deleted by pressing the clear button 31. Specific characters previously selected by the user (e.g. 33) may also be deleted at any time during the process.

There is therefore described a method for allowing the entry of ideographic characters using a mobile communications device 1 supporting a five-way joystick 3 or similar device.

## Claims

1. A method of entering Chinese characters on a hand held electronic device using an input method driven by an input device having a plurality of degrees of freedom of movement, wherein movements of the input device serve to select respective character portions, and wherein a character is constructed from such selected character portions.

2. A method as claimed in claim 1, wherein the input device is a joystick.

3. A method as claimed in claim 1 or 2, wherein the input device is movable in five directions.

4. A method as claimed in claim 2 or 3, wherein the input method is a WuBi input method.

5. A method as claimed in claim 1, wherein the Chinese characters comprise respective combinations of character portions, the method comprising:
displaying indicators relating to respective groups of character portions;
receiving an input for selecting one of the groups of character portions;
displaying the character portion's of the selected group;
receiving an input for selecting one of the displayed character portions;
displaying the indicators and receiving further inputs for selecting further character portions; and
composing a character from such selected character portions.

6. A method as claimed in claim 5, wherein a selection of candidate characters is displayed simultaneously with the displayed character portions of the selected group.

7. A method as claimed in claim 5 or 6, wherein the received inputs are generated in response to user movements of the joystick.

8. A method as claimed in claim 5, wherein respective groups of character portions are displayed as a top-level group of character features each of which represents a subset of selectable characters.

9. A method as claimed in claim 1, wherein the hand held electronic device also includes a display, and a keypad, the method comprising, when the device is in a character entry mode of operation:
displaying on the display a plurality of indicators representing respective character features each indicator being highlightable and selectable by a user operating the joystick;
when an indicator is highlighted on the display by the user, displaying a set of character portions which include the highlighted character feature; and
upon selection by the user of the said highlighted character feature:
presenting on the display the set of character portions which include the selected character feature, said set comprising items which are individually selectable by the user;
presenting simultaneously on the display possible candidate characters for entry based upon the character feature selected;
in response to a user input, selecting a required character from the displayed possible candidate characters, or selecting a required character portion and displaying further character portions and candidate characters, which include the selected character portion, for selection in response to further user inputs;
composing a character from the selected character portions; and
displaying said selected or composed character on the display.

10. A method as claimed in claim 9, wherein the candidate characters are tagged by respective numeric digits.

11. A method as claimed in claim 10, further comprising selecting the required character using the appropriate key of the keypad corresponding to the numeric digit of the required character.

12. A hand held electronic device comprising a controller, a data storage device and an input device having a plurality of degrees of freedom of movement, wherein the data storage device is operable to store character portion data which relate to respective portions of Chinese characters, and wherein the controller is operable to receive user inputs from the input device to select character portion data in dependence upon the received user inputs, and to compose data relating to a Chinese character from such selected character portion data.

13. A device as claimed in claim 12, wherein the input device is a joystick.

14. A device as claimed in claim 12 or 13, wherein the input device is movable in five directions.

15. A device as claimed in claim 12, 13 or 14 wherein the controller and input device are operable in accordance with a WuBi selection method.

16. A device as claimed in claim 12, comprising a display, the device being operable to display indicators relating to respective groups of character portion data, to receive an input for selecting one of the groups of character portions, to display the character portion data from the selected group, to receive an input for selecting one of the displayed character portions, to display the indicators and receive further selection inputs, and to compose a character from the selected character portions.
